# EUROPÄISCHE PATENTANMELDUNG

(11) **EP 2 082 911 A2**
(43) Veröffentlichungstag der Anmeldung: **29.07.2009**
(21) Anmeldenummer: 08020230.2
(22) Anmeldetag: 20.11.2008
(51) Int. Cl.: B60J 7/12

(54) **Cabriolet-Fahrzeug mit einem auf- und zubeweglichen Deckelteil**

(30) Priorität: 22.01.2008 DE 102008005603
(71) Anmelder: Wilhelm Karmann GmbH, 49084 Osnabrück (DE)
(72) Erfinder: Meinert, Stefan, 49143 Wallenhorst (DE)

(57) **Zusammenfassung**

Ein Cabriolet-Fahrzeug (1), mit einem auf- und zubeweglichen Flächenteil (3), insbesondere einem Deckelteil, der in einem ersten Öffnungssinn zur Freigabe einer Durchtrittsöffnung für ein bewegliches Dach (2) oder Dachteil des Fahrzeugs (1) und in einem zweiten Öffnungssinn zur Freigabe einer Ladeöffnung für Gepäck aufbewegbar ist, wobei die Auf- und Zubewegung des Flächenteils (3) über zumindest ein Getriebe (4) vermittelbar ist, das mehrere gelenkig verbundene Lenker (13;16;20;22) umfasst, wird so ausgebildet, dass das Getriebe (4) eine momentane winkelstellung ermöglicht, aus der heraus ein gegenüber dem oder den Freiheitsgrad(en) des Getriebes (4) zusätzlicher Freiheitsgrad zur Ermöglichung eines weiteren Bewegungsablaufs ermöglicht ist.

## Beschreibung

Die Erfindung betrifft ein Cabriolet-Fahrzeug mit einem auf- und zubewegbaren Flächenteil nach dem Oberbegriff des Anspruchs 1.

Ein solches Flächenteil kann insbesondere ein Deckelteil sein der in einem ersten Öffnungssinn zur Freigabe einer Durchtrittsöffnung für das Dach und in einem zweiten Öffnungssinn zur Freigabe einer Ladeöffnung für Gepäck aufbewegbar ist. Auch eine Hutablage oder ein Dachteil kann einen erfindungsgemäß ausgebildeten Flächenteil darstellen. Dieser kann in jedem Fall ein- oder mehrteilig ausgebildet sein.

Es ist bekannt, für die Auf- und Zubewegung des Flächenteils zumindest ein - in der Regel zwei seitliche - Getriebe vorzusehen. Ein solches Getriebe bildet für einen einfachen, verkantungsfreien Lauf häufig ein Mehrgelenk mit nur schwenkbaren Gelenken ohne translatorische Verlagerungsmöglichkeit aus. Um mehrere Öffnungsmöglichkeiten und auch die Sicherung der Schließstellung des Flächenteils zu erlauben, sind häufig Kulissen, Schlösser, mehrere anzusteuernde Antriebe oder andere äußere Zwangssteuerungsmaßnahmen vorgesehen, die das Gewicht und die Kosten erhöhen.

Der Erfindung liegt das Problem zugrunde, hier eine Verbesserung zu erreichen.

Die Erfindung löst dieses Problem durch ein Cabriolet-Fahrzeug mit den Merkmalen des Anspruchs 1. Hinsichtlich vorteilhafter Ausgestaltungen und Weiterbildungen der Erfindung wird auf die Ansprüche 2 bis 10 verwiesen.

In der erfindungsgemäßen Ausbildung ist erreicht, dass allein durch Maßnahmen innerhalb des Getriebes verschiedene Bewegungsmöglichkeiten des Flächenteils eröffnet sind. Von außen einwirkender Kulissen oder dergleichen bedarf es hierfür nicht. Dabei ist in zumindest einer Winkelstellung eine Verzweigungslage geschaffen, bei der immer ein Freiheitsgrad mehr erreicht ist, als sich eigentlich nach Zahl der Gelenke und der Anzahl der Glieder rechnerisch ergibt.

Um diese Winkelstellung als eine Verzweigungslage einfach zu ermöglichen, liegen vorteilhaft in dieser Lage zwei Gelenke des Getriebes koaxial hintereinander gelegen sind, wobei insbesondere zwei in einem Gelenk miteinander verbundene Lenker (11;22) hintereinander gelegen sind und von diesem Gelenk (23) aus der Abstand zu den genannten koaxialen Gelenken jeweils gleichgroß ist.

Sofern diese Verzweigungslage eine Schließstellung des Flächenteils ist und in dieser Verzweigungslage des Getriebes Lenker in ihrer Bewegung gegeneinander allein durch die Lage der Gelenke des Getriebes blockiert sind, zum Beispiel durch eine Über-Totpunkt-Lage, ist die Konstruktion besonders einfach.

Insbesondere kann das Getriebe außerhalb der genannten Winkelstellung einen Gesamtfreiheitsgrad von 1 aufweisen, so dass die Bewegung zwangsläufig vorgegeben ist. In der Verzweigungslage ist hingegen eine Zwanglosigkeit erreicht, in der durch die genannte Verzweigungsstellung ein zweiter Freiheitsgrad gewonnen wird. Dadurch sind zwei unterschiedliche Bewegungsabläufe des Flächenteils aus der zwanglosen Lage heraus ermöglicht.

Sehr günstig ist die Verzweigungslage eine Schließstellung des Flächenteils. Dabei kann zum Beispiel durch eine Über-Totpunkt-Lage ein Schloss, ein blockierender Hydraulikzylinder o. ä. zur Sicherung dieser Stellung eingespart werden.

Es ist dann möglich, dass in der Schließstellung ein Deckelteil allein in einem hinteren Schloss zur Blockierung einer Öffnung zur Freigabe einer Ladeöffnung für Gepäck an der Karosserie verriegelt ist und eine gegensinnige Aufbewegung des Deckelteils zur Freigabe einer Durchtrittsöffnung für das Dach durch die blockierende Winkelstellung innerhalb des Getriebes ohne ein weiteres Schloss verhindert ist.

Besonders vorteilhaft sind für einen einfachen Aufbau des Getriebes Kulissen oder weitere Schlösser zur Blockierung der Aufbewegung vollständig entbehrlich.

Weitere Vorteile und Merkmale der Erfindung ergeben sich aus einem in der Zeichnung schematisch dargestellten und nachfolgend beschriebenen Ausführungsbeispiel des Gegenstandes der Erfindung.

In der Zeichnung zeigt:
- Fig. 1: den Heckbereich eines erfindungsgemäßen Cabriolet-Fahrzeugs bei geschlossenem Dach in schematischer Seitenansicht, wobei das Flächenteil hier als in zwei Öffnungssinnen aufbewegbares Deckelteil für den Kofferraum und Aufnahmeraum eines Daches ausgebildet und hier in geschlossener Stellung dargestellt ist,
- Fig. 2: bis Fig. 7 die Aufbewegung des Deckelteils zur Freigabe einer Durchtrittsöffnung für das Dach, dargestellt in einer schematischen Seitenansicht nur des hintersten Fahrzeugseitenbereichs hinter dem rückwärtigen Dachende,
- Fig. 8: den Beginn der gegensinnigen Öffnung des Deckelteils aus seiner geschlossenen Position nach Fig. 2 zur Freigabe einer Ladeöffnung für Gepäck in ähnlicher schematischer Seitenansicht wie in Fig. 2,
- Fig. 9: eine ähnliche Ansicht wie Fig. 8 bei weiter fortschreitender Öffnung des Deckelteils zur Freigabe der Ladeöffnung für Gepäck,
- Fig. 10: eine ähnliche Ansicht wie Fig. 9 bei vollständiger Öffnung des Deckelteils im genannten Öffnungssinn,

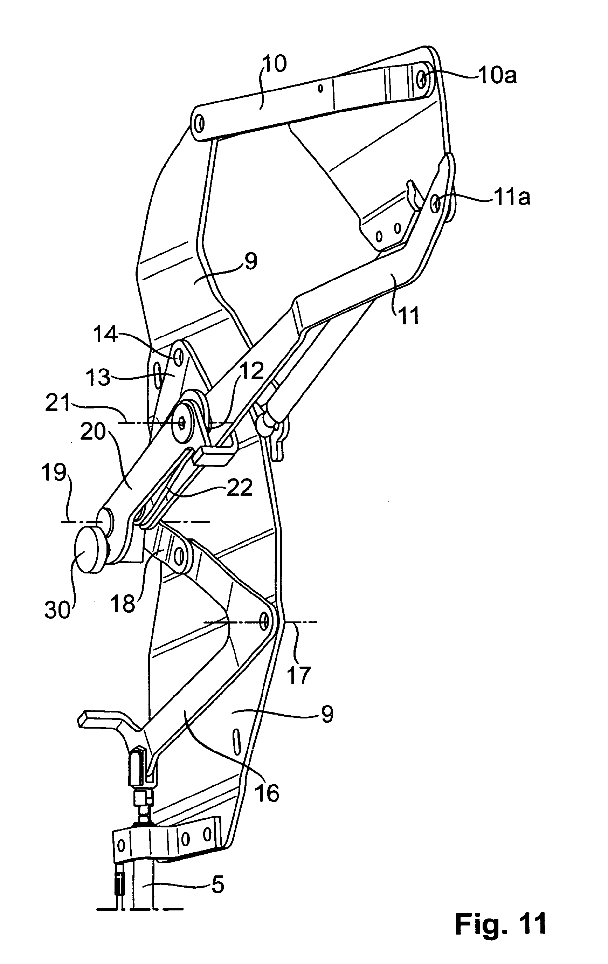

- Fig. 11: eine perspektivische Ansicht von schräg vorne auf das Getriebe in seiner die Schließstellung des Deckelteils sichernden Stellung nach Fig. 2,

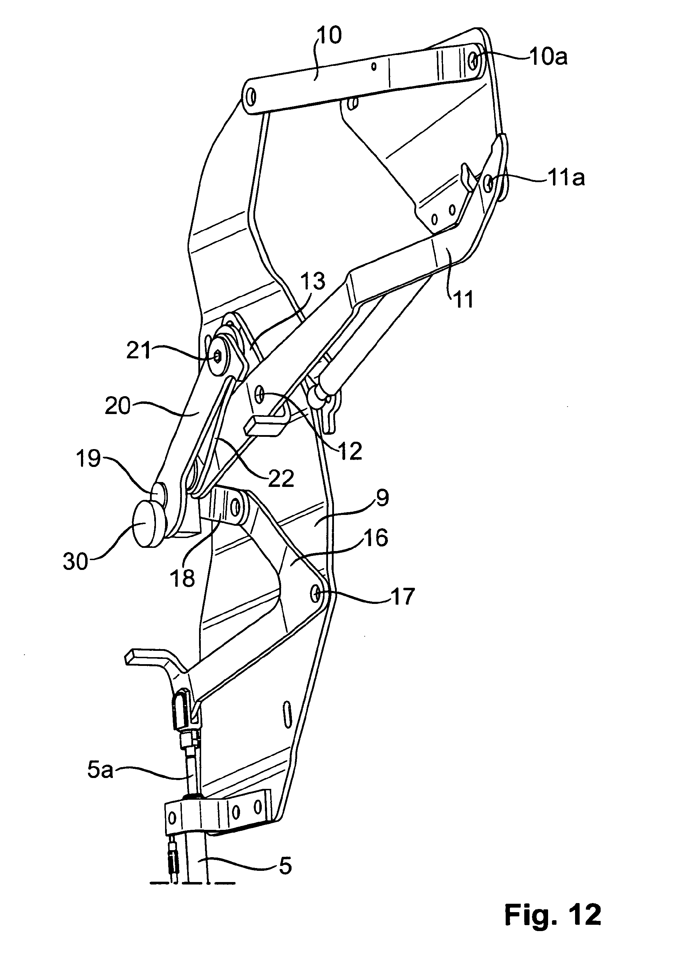

- Fig. 12: eine ähnliche Ansicht wie Fig. 11, jedoch während der Öffnung des Deckelteils zur Freigabe der Durchtrittsöffnung für das Dach, etwa entsprechend der Stellung nach Fig. 3,

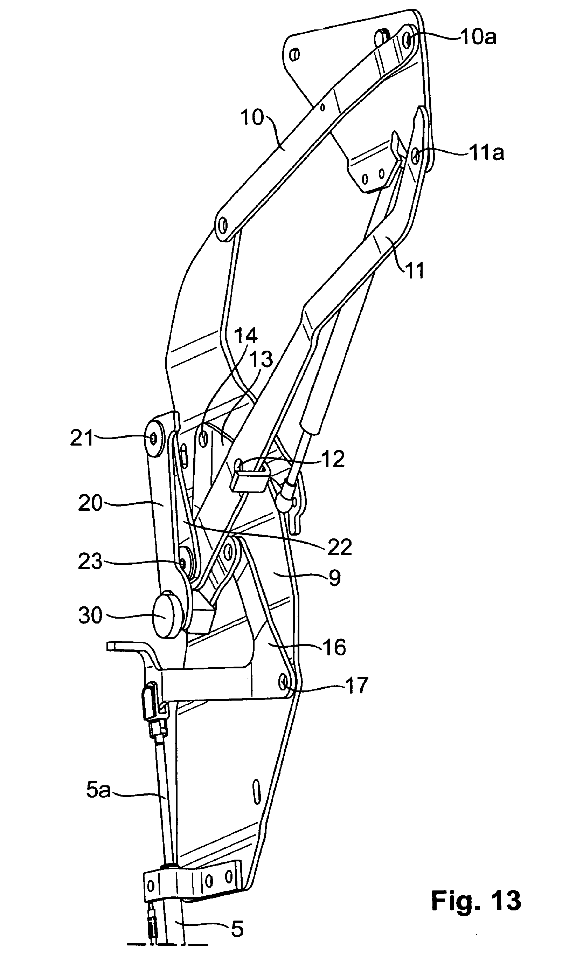

- Fig. 13: eine ähnliche Ansicht wie Fig. 12, jedoch bei weiter fortschreitender Deckelteilöffnung im genannten Öffnungssinn, etwa entsprechend der Stellung nach Fig. 4,

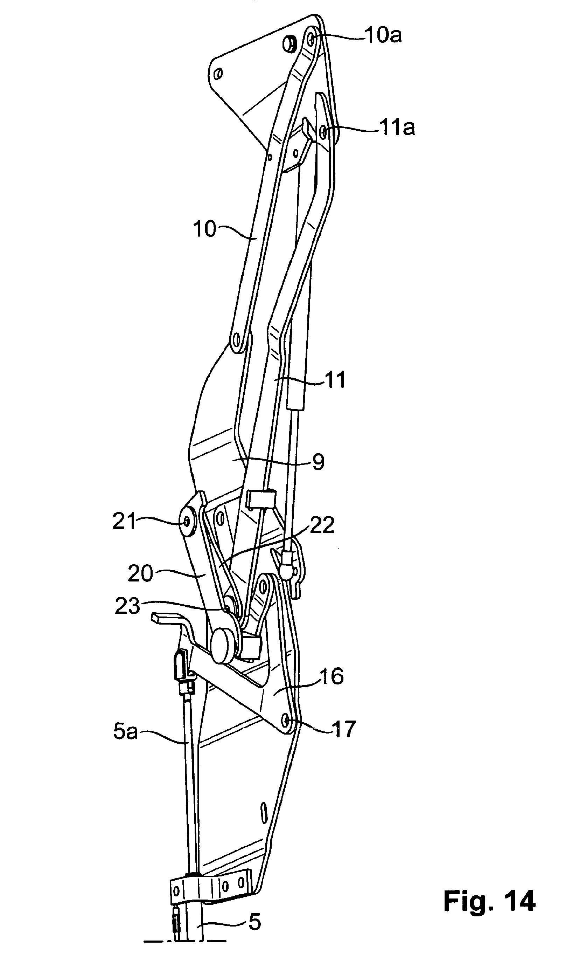

- Fig. 14: eine ähnliche Ansicht wie Fig. 13, jedoch bei weiter fortschreitender Deckelteilöffnung im genannten Öffnungssinn, etwa entsprechend der Stellung nach Fig. 6,

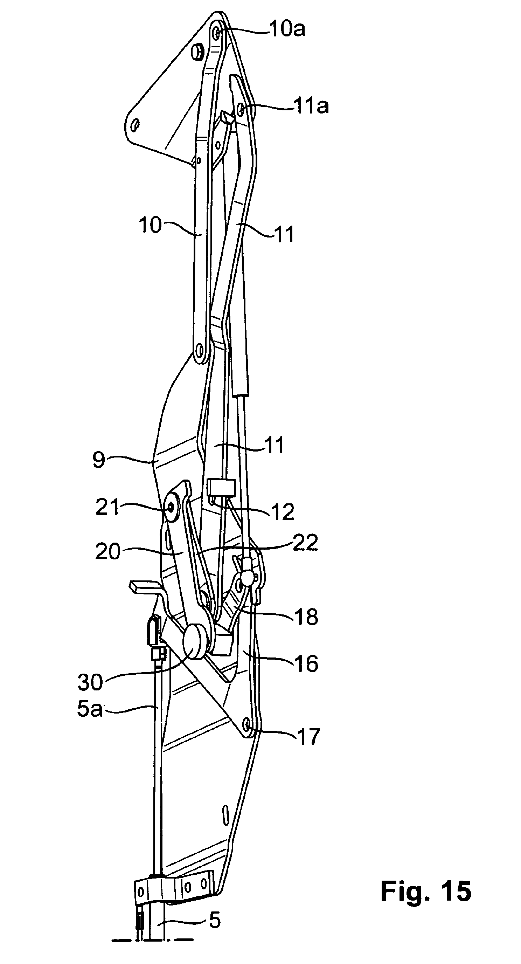

- Fig. 15: eine ähnliche Ansicht wie Fig. 14, jedoch bei vollständiger Deckelteilöffnung im genannten Öffnungssinn, etwa entsprechend der Stellung nach Fig. 7,

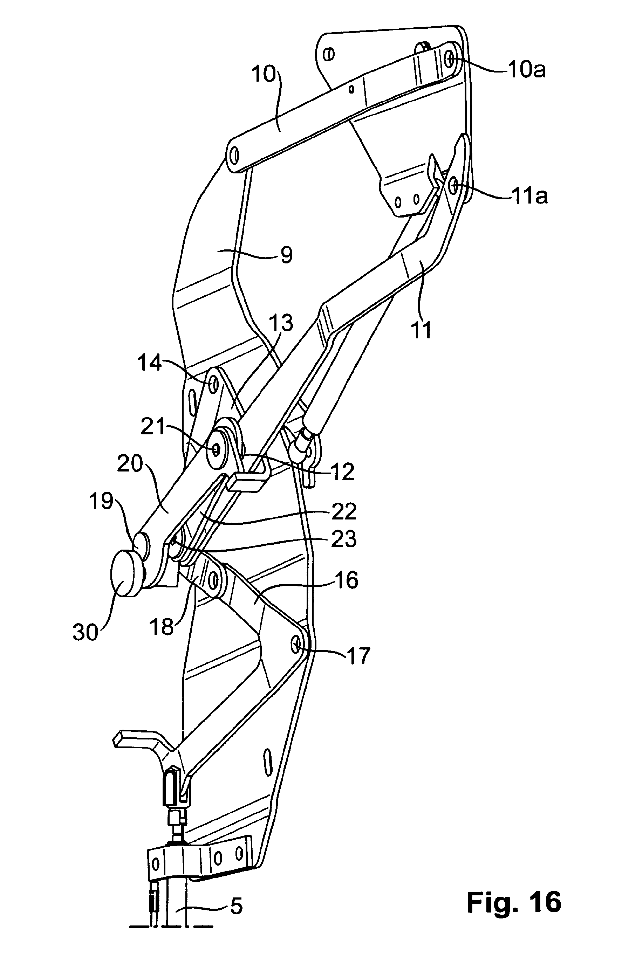

- Fig. 16: eine ähnliche Ansicht wie Fig. 15, jedoch jetzt bei beginnender gegensinniger Deckelteilöffnung zur Freigabe einer Ladeöffnung für Gepäck, etwa entsprechend der Stellung nach Fig. 8,

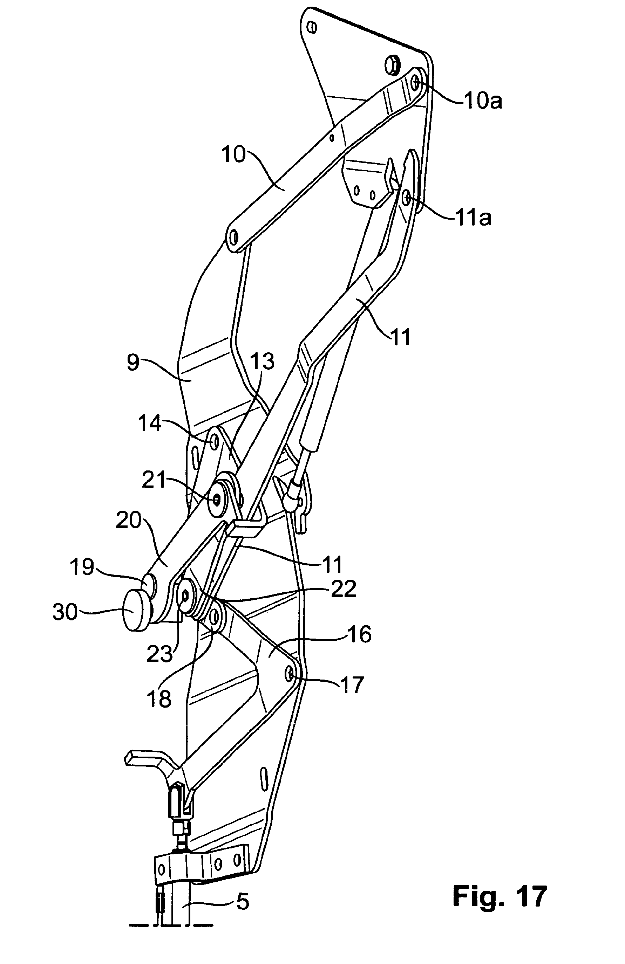

- Fig. 17: eine ähnliche Ansicht wie Fig. 16 bei weiter fortschreitender Öffnung im genannten Öffnungssinn, etwa entsprechend der Stellung nach Fig. 7,
- Fig. 18: eine ähnliche Ansicht wie Fig. 14, jedoch bei vollständiger Deckelteilöffnung im genannten Öffnungssinn, etwa entsprechend der Stellung nach Fig. 7,

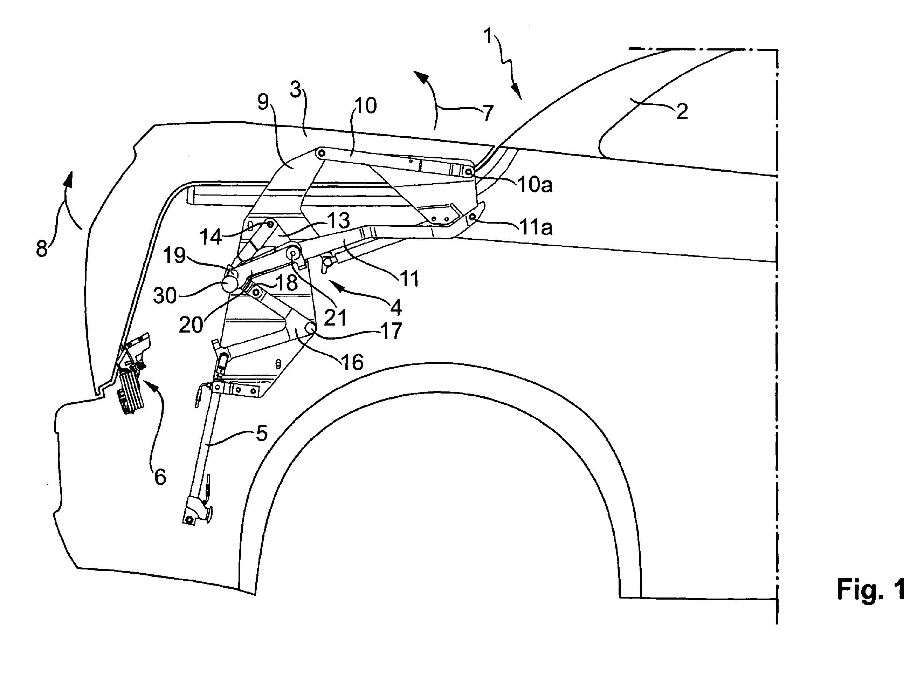

Das erfindungsgemäße Cabriolet-Fahrzeug 1 ist mit einem beweglichen Dach oder zumindest Dachteil 2 versehen (Fig.1). Das Fahrzeug 1 kann dabei ein mit zumindest einer Rückbank versehenes vier- oder mehrsitziges Fahrzeug oder auch ein Zweisitzer sein. Dargestellt ist in Fig. 1 ein Stufenheckfahrzeug, auch Fahrzeuge mit beispielsweise einem Steilheck oder Schrägheck, wie etwa Kompaktwagen, Kombis, SUVs oder ähnliches, kommen in Betracht.

Das Dach 2 gemäß Fig. 1 kann als ein sog. Retractable Hardtop (RHT) mit festen plattenförmigen Dachaußenteilen ausgebildet sein. Auch eine Dachausbildung mit einem textilen Bezug als sog. Softtop oder eine Mischform ist möglich.

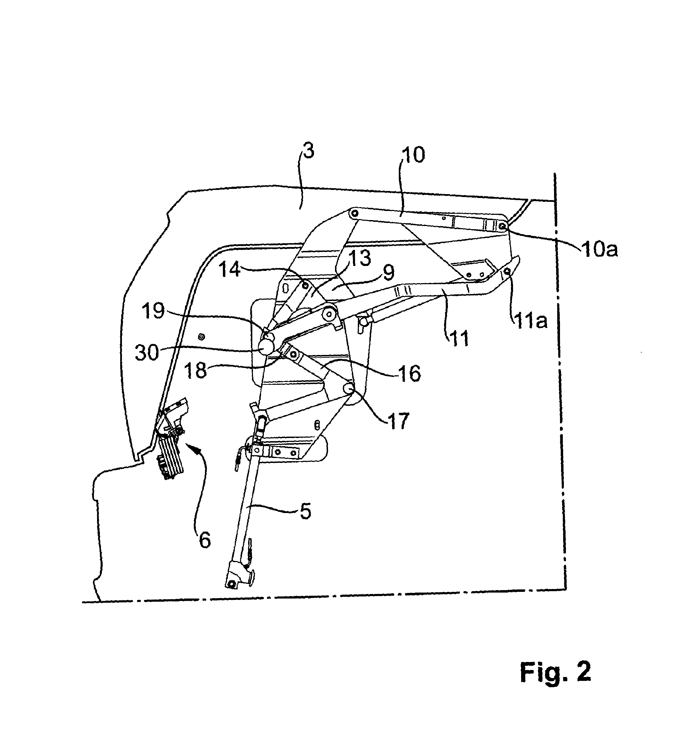

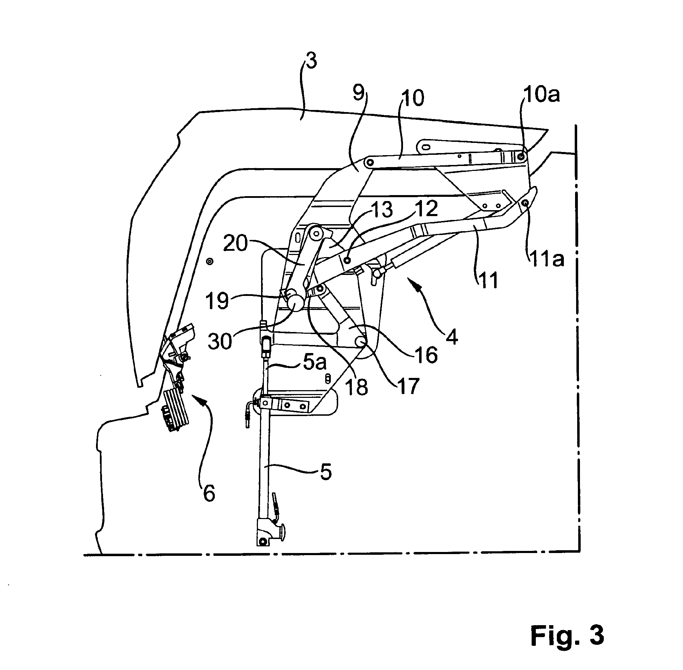

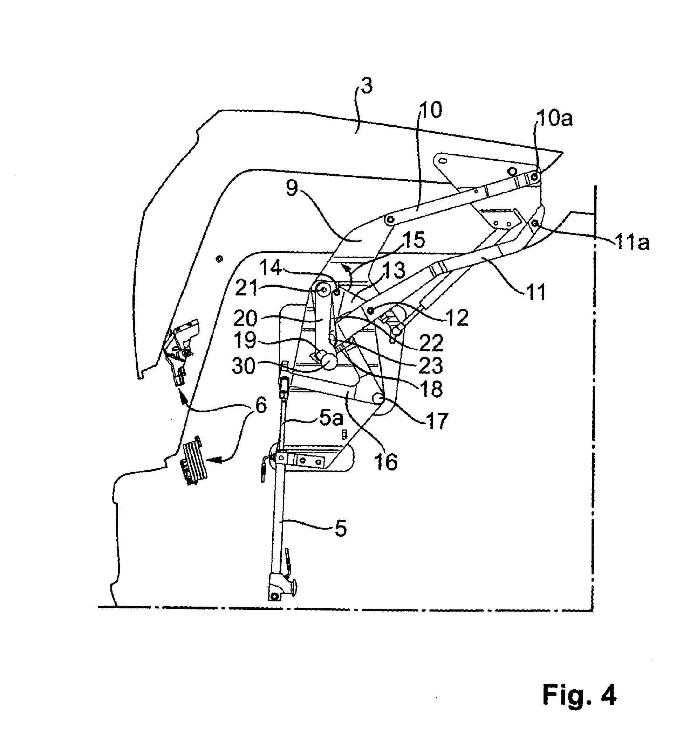

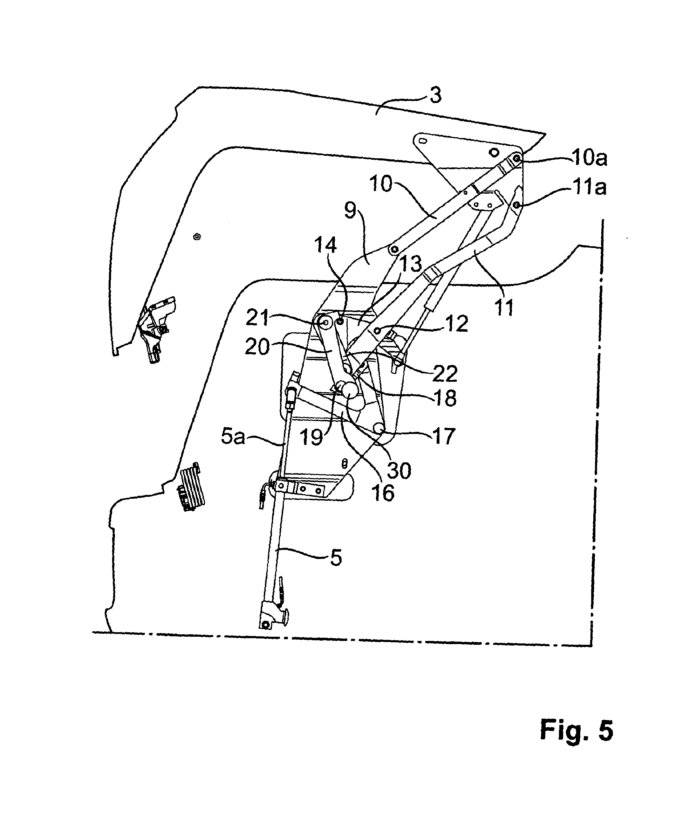

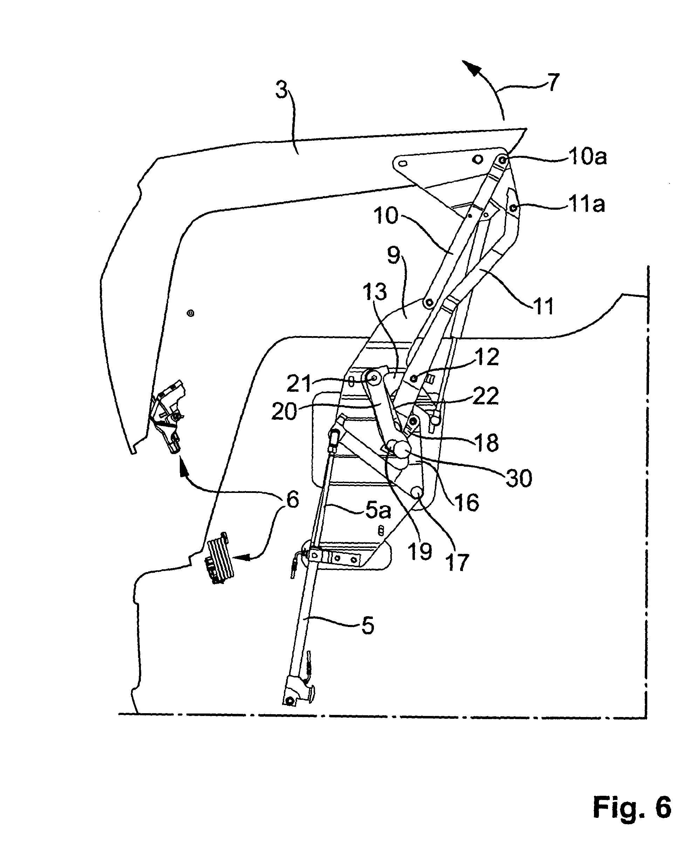

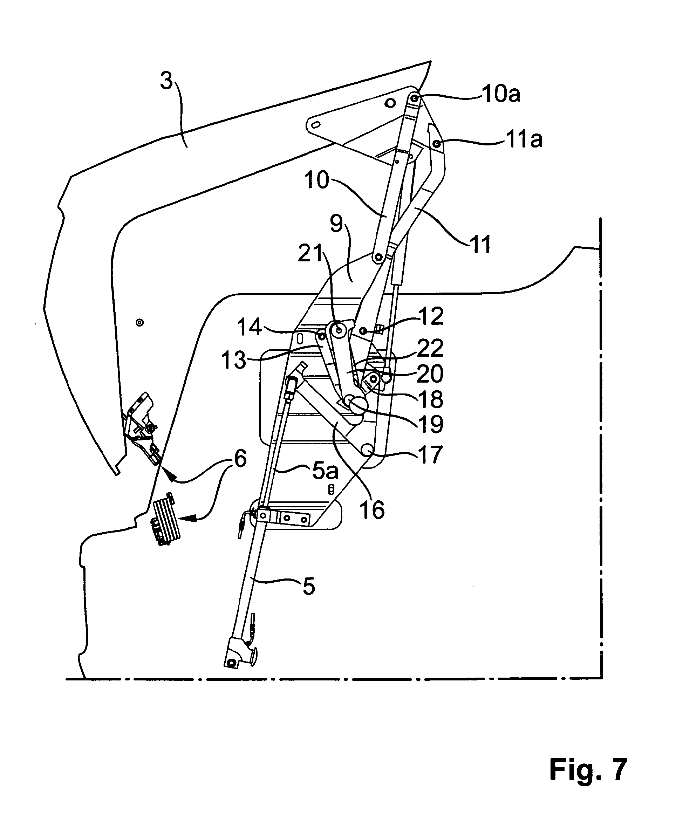

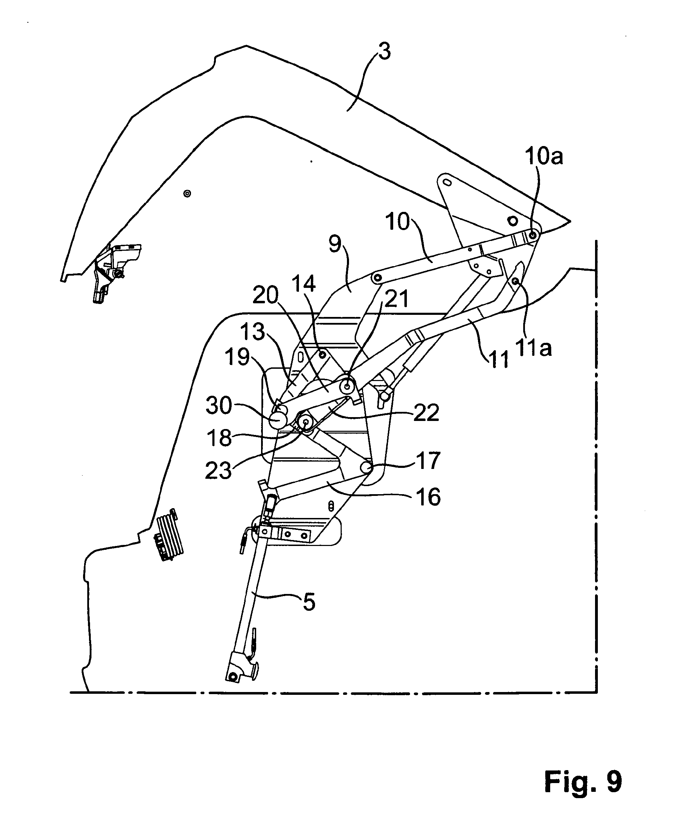

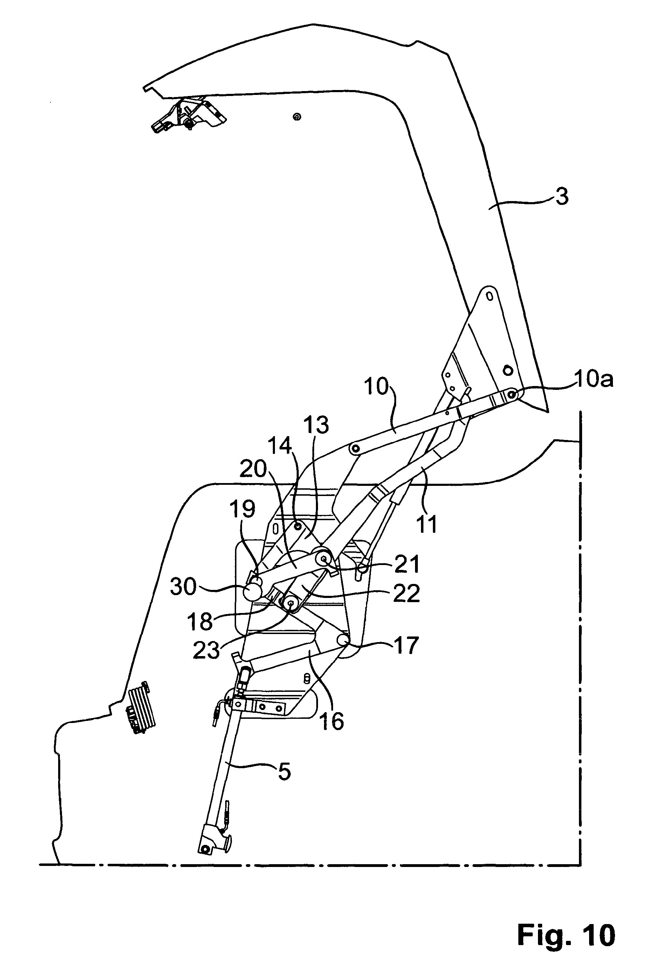

In seinem geöffneten Zustand ist das Dach 2 ganz oder teilweise in einem Aufbewahrungsraum unterhalb eines heckseitigen, flächigen Deckelteils 3 halterbar. Dieses ist insgesamt über zumindest ein Getriebe 4 auf- und zubeweglich, wobei in der Regel an jeder Fahrzeugquerseite ein solches Getriebe 4, wie es in Fig. 1 dargestellt ist, vorgesehen ist. Der ein- oder mehrteilige Deckelteil 3 ist gemäß der Zeichnung in zwei unterschiedlichen Öffnungsbewegungen (Fig. 2 bis Fig. 7 bzw. Fig. 8 bis Fig. 10) aufbeweglich.

Für die nach hinten in Richtung des Pfeils 7 öffnende Bewegung zur Freigabe einer Durchtrittsöffnung für das Dach 2 kann das Getriebe 4 von einem Antriebsorgan 5 beaufschlagt werden. Dabei ist der Deckelteil 3 zuvor aus einem heckseitigen Schloss 6 zu lösen.

Für die nach vorne in Richtung des Pfeils 8 öffnende Bewegung zur Freigabe der Ladeöffnung für Gepäck kann der Deckelteil 3 manuell oder von einem weiteren Antrieb bewegbar sein. Auch hier ist zunächst das heckseitige Schloss 6 zu entriegeln, wofür eine Fernbedienung oder eine mit einer Antriebssteuerung zusammenwirkende Automatik vorgesehen sein kann. Der Antrieb 5 bleibt jedoch bei dieser Öffnungsbewegung unbewegt in eingefahrener Stellung der Kolbenstange 5a.

An Stelle des hier dargestellten Deckelteils 3 kann zusätzlich oder alternativ auch ein anderes der Karosserie oder dem Dach 2 zugeordnetes Flächenteil 3 erfindungsgemäß bewegbar sein.

Das Getriebe 4 umfasst einen karosseriefest gehaltenen Rahmen 9, von dem aus zu dem Deckelteil 3 zwei Lenker 10, 11 nach Art eines Parallelogramms erstreckt sind und am Deckelteil 3 über Gelenke 10a bzw. 11a angreifen. Der obere Lenker 10 ist mit seinem dem Deckelteil 3 abgewandten Ende direkt an dem festen Rahmen 9 schwenkbeweglich gelagert. Der untere Lenker 11 ist hingegen am mehr oder weniger mittig an diesem gelegenen Gelenk 12 an einem Schenkel eines dahinter liegenden, ungefähr boomerangförmigen Lenkers 13 gehalten, der seinerseits über das Gelenk 14 am Rahmen 9 schwenkbar gelagert ist.

Für das Öffnen des Deckelteils 3 im Sinne der Figuren 2 bis 7 zur Freigabe der Durchtrittsöffnung für das Dach 2 wird der Lenker 13 in Richtung des Pfeils 15 um sein karosseriefestes Gelenk 14 verschwenkt. Hierfür wird der Hebel 13 von einem ebenfalls boomerangförmigen und mit der Kolbenstange 5a des Antriebs 5 direkt beaufschlagbaren Steuerhebel 16 beaufschlagt, der durch Ausschub der Kolbenstange 5a um sein karosseriefestes Lager 17 gemäß der Darstellung Zeichnung im Uhrzeigersinn verschwenkbar ist und dabei einen an seinem der Kolbenstange 5a abgewandten Schenkel gelagerten Zwischenhebel 18 mitzieht.

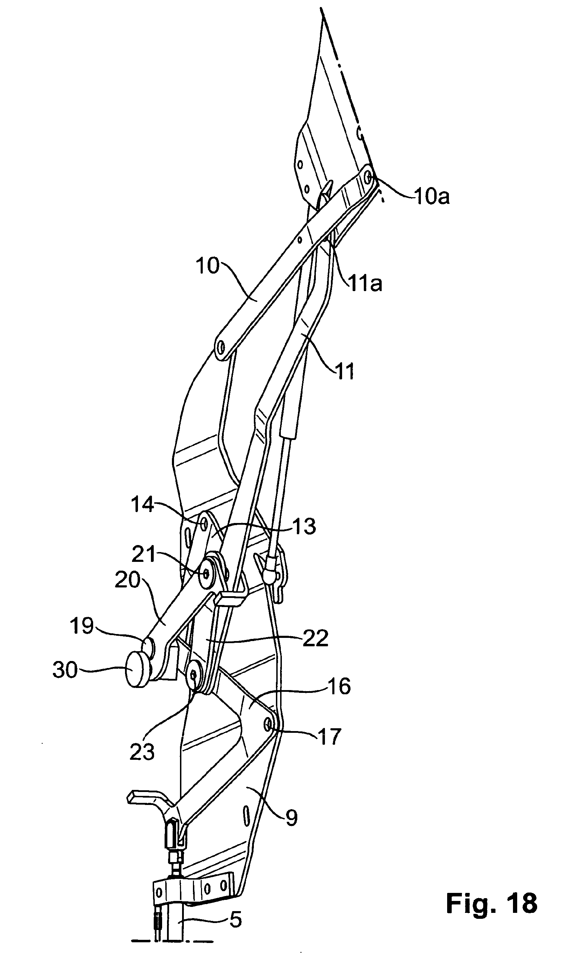

Dieser Zwischenhebel 18 steht am Gelenk 19, wie insbesondere in Fig. 18 zu erkennen ist, einerseits in direkter Schwenkverbindung zum Hebel 13, und zwar an dessen dem Gelenk 12 abgewandten Schenkel. Ein Zug über den Zwischenhebel 18 über das Gelenk 19 bewirkt daher direkt die Drehung des boomerangförmigen Lenkers 13 um sein Gelenk 14 in Richtung des Pfeils 15.

Andererseits steht der Zwischenhebel 18 am Gelenk 19 auch noch in Verbindung mit einem zweiten, im wesentlichen geradlinigen Lenker 20. Die Winkelstellung zwischen dem Zwischenhebel 18 und dem Lenker 20 ist über eine Sicherungseinheit 30 fixiert, d. h., dass sich die Hebel 20 und 18 nur gemeinsam - wie ein insgesamt durchgehendes Bauteil - bewegen, ihre Winkelstellung zueinander somit stets gleich bleibt und das Gelenk 19 nur zum gemeinsamen Verschwenken dieser Lenker 18, 20 dient.

Die Sicherungseinheit 30 ist hier beispielhaft als mit einem großen und von Hand bedienbaren Kopf versehene und einteilige Schraube ausgebildet.

Der Lenker 20 weist keine karosseriefeste Lagerung auf, sondern ist mit seinem dem Gelenk 19 gegenüber liegenden Ende am Gelenk 21 mit einem ungefähr parallel und mehr oder weniger deckungsgleich dahinter liegenden weiteren Lenker 22 verbunden. Dieser ist ebenfalls nicht karosseriefest gelagert, sondern steht mit seinem dem Gelenk 21 gegenüber liegenden Ende am Gelenk 23 in Schwenkverbindung mit dem unteren Lenker 11 des Parallelogramms. Diese Anlenkung 23 liegt an einem der Deckelteilanbindung 11a gegenüber gelegenen Ende dieses Lenkers 11. Über den Zwischenhebel 18 wird daher die Aufstellbewegung des Lenkers 11 bewirkt, der über das Gelenk 11a am vorderen Ende des Deckelteils 3 angreift und dieses dabei aufstellt.

In der Verzweigungslage bei geschlossenem Deckelteil liegt dabei das Gelenk 21 koaxial vor dem Anbindungsgelenk 12 des Lenkers 11.

Dabei ist weiter der Abstand von dem Verbindungsgelenk 23 zu dem Gelenk 21 entlang dem Lenker 22 ebenso lang wie von dem Verbindungsgelenk 23 entlang dem Lenker 11 zu seinem Anbindungsgelenk 12. Beide Gelenke 12 und 21 sind Teil eines beweglichen Teilviergelenks innerhalb des Getriebes 4.

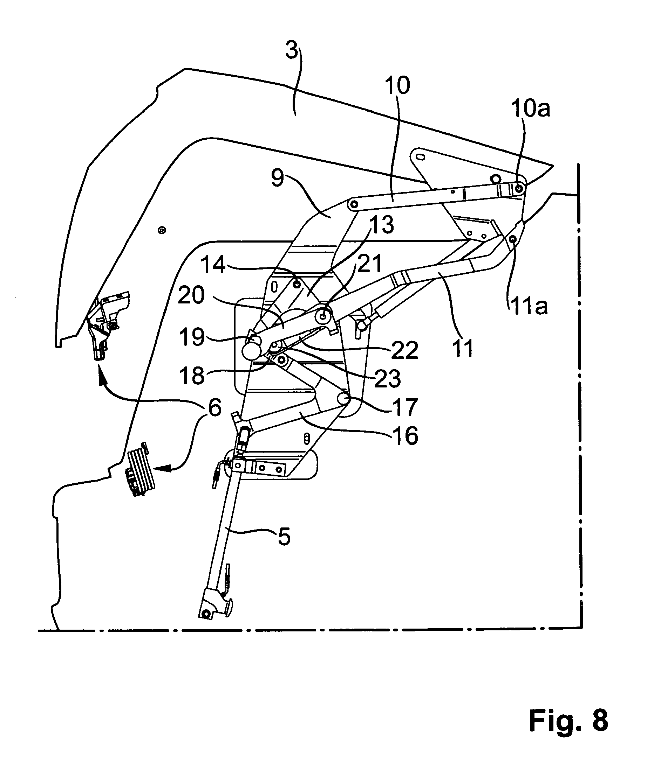

Wie in den Figuren 2 bis 7 deutlich wird, verändern die Lenker 20 und 22 ihre Lage zueinander während der Deckelteilöffnung zur Freigabe einer Durchtrittsöffnung für das Dach 2 nicht oder nur minimal, verschwenken jedoch bei gegensinniger Öffnung (Fig.8 bis Fig. 10) deutlich gegeneinander. Dann ist die Hemmung der Bewegung dieser Lenker 20, 22 gegeneinander aufgehoben, so dass sie um das Gelenk 21 des Teilviergelenks gegeneinander öffnen.

Zur Sicherstellung der Schließstellung sind keine äußeren Blockierungsmittel, Schlösser, Anschläge, Kulissen oder ähnliches erforderlich, sondern es reicht neben dem heckseitigen Schloss 6 bei eingefahrenem Antrieb 5 eine Totpunktlage innerhalb des Getriebes 4 zu dessen Blockierung. Auch das heckseitige Schloss 6 ist in beiden Öffnungssinnen des Deckelteils 3 entriegelt.

Aus der deckungsgleichen Stellung der Gelenke 21 und 12 sind zwei unterschiedliche Getriebebewegungsabläufe ermöglicht: zum einen der zur Freigabe der Durchtrittsöffnung für das Dach 2, bei dem die Lenker 20 und 22 gegeneinander mehr oder weniger unbewegt bleiben, zum anderen den zur Freigabe der Ladeöffnung für Gepäck, bei dem die Hebel 20 und 22 gegeneinander mit großem Öffnungswinkel verschwenken. Aus der koaxial hintereinander liegenden Schließstellung der Gelenke 21 und 12 ist daher gegenüber dem hier einen Freiheitsgrad des Getriebes 4 ein zusätzlicher Freiheitsgrad zur Ermöglichung eines zweiten Bewegungsablaufs ermöglicht. Diese Schließstellung bildet somit eine Verzweigungsstellung aus, in der die Zwangsläufigkeit des Getriebes 4 zugunsten einer zwanglosen Stellung aufgehoben ist. Auch wenn das Getriebe 4 ohnehin mehrere Freiheitsgrade hat, wird durch die Verzweigungsstellung ein weiterer Freiheitsgrad erreicht.

Hier weist das Getriebe 4 außerhalb der Verzweigungslage einen Gesamtfreiheitsgrad von 1 auf und erhält durch die genannte Verzweigungslage einen zweiten Freiheitsgrad.

Die Verzweigungsstellung ist hier die Schließstellung des Flächenteils 3, aus der heraus die beiden unterschiedlichen Öffnungsbewegungen ermöglicht werden.

In der Schließstellung ist der Deckelteil 3 allein in dem hinteren Schloss 6 zur Verhinderung einer Öffnung zur Freigabe einer Ladeöffnung für Gepäck an der Karosserie verriegelt und eine gegensinnige Aufbewegung des Deckelteils zur Freigabe einer Durchtrittsöffnung für das Dach durch die blockierende Winkelstellung innerhalb des Getriebes 4 verhindert.

## Patentansprüche

1. Cabriolet-Fahrzeug (1), mit einem auf- und zubeweglichen Flächenteil (3), insbesondere einem Deckelteil, der in einem ersten Öffnungssinn zur Freigabe einer Durchtrittsöffnung für ein bewegliches Dach (2) oder Dachteil des Fahrzeugs (1) und in einem zweiten Öffnungssinn zur Freigabe einer Ladeöffnung für Gepäck aufbewegbar ist, wobei die Auf- und Zubewegung des Flächenteils (3) über zumindest ein Getriebe (4) vermittelbar ist, das mehrere gelenkig verbundene Lenker (13;16;18;20;22) umfasst,
**dadurch gekennzeichnet,**
**dass** das Getriebe (4) eine momentane Lage von Lenkern (13;16;18;20;22) ermöglicht, aus der heraus ein gegenüber dem oder den Freiheitsgrad(en) des Getriebes (4) zusätzlicher Freiheitsgrad zur Ermöglichung eines weiteren Bewegungsablaufs ermöglicht ist.

2. Cabriolet-Fahrzeug (1) nach Anspruch 1,
**dadurch gekennzeichnet,**
**dass** in der Winkelstellung nach Anspruch 1, die eine Verzweigungsstellung darstellt, zwei Gelenke (21;12) des Getriebes (4) koaxial hintereinander gelegen sind.

3. Cabriolet-Fahrzeug (1) nach Anspruch 2,
**dadurch gekennzeichnet,**
**dass** in der Winkelstellung nach Anspruch 1 zwei in einem Gelenk (23) miteinander verbundene Lenker (11;22) hintereinander gelegen sind und von diesem Gelenk (23) aus der Abstand zu den genannten koaxialen Gelenken (21;12) gleichgroß ist.

4. Cabriolet-Fahrzeug (1) nach einem der Ansprüche 1 bis 3,
**dadurch gekennzeichnet,**
**dass** außerhalb der Winkelstellung nach Anspruch 1 Lenker (20;22) in ihrer Bewegung gegeneinander allein durch die Lage von Lenkern (13;16;20;22) und Gelenken (12;17;19;21;23) des Getriebes (4) gehemmt sind.

5. Cabriolet-Fahrzeug (1) nach Anspruch 1 bis 4,
**dadurch gekennzeichnet,**
**dass** das Getriebe (4) außerhalb der genannten momentanen Winkelstellung, die eine zwanglose Lage des Getriebes (4) darstellt, einen Gesamtfreiheitsgrad von 1 aufweist und in der genannten Winkelstellung einen zweiten Freiheitsgrad erhält.

6. Cabriolet-Fahrzeug nach einem der Ansprüche 1 bis 5,
**dadurch gekennzeichnet,**
**dass** die Verzweigungslage des Getriebes (4) eine Schließstellung des Flächenteils (3) ist.

7. Cabriolet-Fahrzeug (1) nach einem Anspruch 6,
**dadurch gekennzeichnet,**
**dass** in der Schließstellung ein als Deckelteil ausgebildetes Flächenteil (3) allein in einem hinteren Schloss (6) zur Blockierung einer Öffnung zur Freigabe einer Ladeöffnung für Gepäck an der Karosserie verriegelt ist und eine gegensinnige Aufbewegung des Deckelteils zur Freigabe einer Durchtrittsöffnung für das Dach durch die blockierende Lage von Lenkern (20;22) durch Maßnahmen innerhalb des Getriebes (4) verhindert ist.

8. Cabriolet-Fahrzeug (1) nach Anspruch 7,
**dadurch gekennzeichnet,**
**dass** in der Schließstellung eine Über-Totpunkt-Lage innerhalb des Getriebes (4) eingestellt ist.

9. Cabriolet-Fahrzeug (1) nach einem der Ansprüche 7 oder 8,
**dadurch gekennzeichnet,**
**dass** Kulissen oder weitere Schlösser zur Blockierung der Aufbewegung vollständig entbehrlich sind.

10. Cabriolet-Fahrzeug (1) nach einem der Ansprüche 2 bis 9,
**dadurch gekennzeichnet,**
**dass** die in der Verzweigungslage koaxial liegenden Gelenke (12;21) Bestandteil eines Viergelenks sind, in dem zwei Abstände entlang Lenkern (11;22) zwischen den Gelenken (23;12) bzw. (23;21) gleichlang sind.
